# EUROPEAN PATENT SPECIFICATION

(11) **EP 1 604 238 B1**
(45) Date of publication and mention of the grant of the patent: **26.05.2010**
(21) Application number: 04709831.4
(22) Date of filing: 10.02.2004
(51) Int. Cl.: G02B 6/36, G02B 6/44

(54) **FIBER OPTIC APPARATUS**
FASEROPTISCHE VORRICHTUNG
APPAREIL POUR FIBRES OPTIQUES

(30) Priority: 18.02.2003 US 371327
(43) Date of publication of application: 14.12.2005
(73) Proprietor: MOLEX INCORPORATED, Lisle, Illinois 60532 (US)
(72) Inventor: SUN, Maurice, X., Naperville, IL 60463 (US); GROIS, Igor, Northbrook, IL 60062 (US)
(74) Representative: Dr. Weitzel & Partner
(86) International application number: PCT/US2004/003759
(87) International publication number: WO 2004/074894

(56) References cited:
- EP-A- 1 103 832
- WO-A1-03/087913
- US-A- 5 259 051
- US-A1- 2002 015 563
- US-A1- 2002 110 342

## Description

### Field of the Invention:

This invention generally relates to the art of optical fibers and, particularly, to a fiber optic apparatus for cross-connecting the individual fibers of a plurality of fiber optic ribbons.

### Background of the Invention:

Fiber optic circuitry is increasingly being used in electronics systems where circuit density is ever-increasing and is difficult to provide with known electrically wired circuitry. An optical fiber circuit is formed by a plurality of optical fibers carried by a dielectric, and the ends of the fibers are interconnected to various forms of connectors or other optical transmission devices. A fiber optic circuit may range from a simple cable which includes a plurality of optical fibers surrounded by an outer cladding or tubular dielectric to a more sophisticated optical backplane or flat fiber optic circuit formed by a plurality of optical fibers mounted on a substrate in a given pattern or circuit geometry.

One type of optical fiber circuit is produced in a ribbonized configuration wherein a row of optical fibers are disposed in a side-by-side parallel array and coated with a matrix to hold the fibers in the ribbonized configuration. This often is called "ribbonizing" In the United States, an eight-fiber ribbon or a twelve-fiber ribbon have become common. In other foreign countries, the standard may range from as a low as four to as high as twenty-four fibers per ribbon. Multi-fiber ribbons and connectors have a wide range of applications in fiber optic communication systems. For instance, optical splitters, optical switches, routers, combiners and other systems have input fiber optic ribbons and output fiber optic ribbons.

With various applications such as those described above, the individual optical fibers of input fiber optic ribbons and output fiber optic ribbons are cross-connected or reorganized whereby the individual optical fibers of a single input ribbon may be separated and reorganized into multiple or different output ribbons. The individual optical fibers are cross-connected or reorganized in what has been called a "mixing zone" between the input and output ribbons.

Optical backplanes are fabricated in a variety of manners, ranging from laying the optical fibers on a substrate by hand to routing the optical fibers in a given pattern or circuit geometry onto the substrate by mechanized apparatus. The individual optical fibers are cross-connected or reorganized on the substrate between input and output ribbons projecting from input and output ends or edges of the substrate. Therefore, the above-mentioned "mixing zone" is provided by the substrate, itself. The input and/or output ribbons which project from the edges of the substrate then are cut-off at predetermined lengths according to the backplane specifications and are terminated to a plurality of fiber optic connectors.

A problem continues to be encountered when the input and/or output ribbons which project from the substrate are terminated to fiber optic connectors or other connecting devices. As stated above, the ribbons are cut-off to particular backplane specifications before they are terminated to the fiber optic connectors. In other words, the lengths of the ribbons which project away from the substrate are predetermined in order to provide generally straight ribbons so that the ribbons are not bent or buckled when installed for a particular usage of the fiber optic apparatus. Buckled or bent ribbons are prone to breakage and they take up too much space or "real estate" in very high dense or compact applications.

The problem occurs when a mistake or error is made in terminating one or more of the fiber optic connectors to the ribbons which project from the edges of the substrate. If an incorrect termination is made, the connector is removed and the ribbon must re-cut and re-terminated. Consequently, manufacturers have built in a tolerance in the length of the ribbons, such as ± 10 millimeters in ribbon length. Unfortunately, this tolerance only accommodates a single re-termination, at most. If another error occurs, the entire fiber optic apparatus, including the substrate and multiple input/output ribbons, is discard and wasted.

US 2002/110342 A1 discloses a fiber optic apparatus as per the preamble of claim 1.

EP-A-1 103 832 discloses a releasable substrate to fabricate optical interconnections.

The invention is directed to solving the above addressed problem.

The problem is solved by a fiber optic apparatus according to claim 1.

### Brief Description of the Drawings:

The features of this invention which are believed to be novel are set forth with particularity in the appended claims. The invention, together with its objects and the advantages thereof, may be best understood by reference to the following description taken in conjunction with the accompanying drawings, in which like reference numerals identify like elements in the figures and in which:
FIG. 1 is a plan view of a fiber optic apparatus according to the prior art; and
FIG. 2 is a plan view of a fiber optic apparatus according to the invention.

### Retailed Description of the Preferred Embodiment:

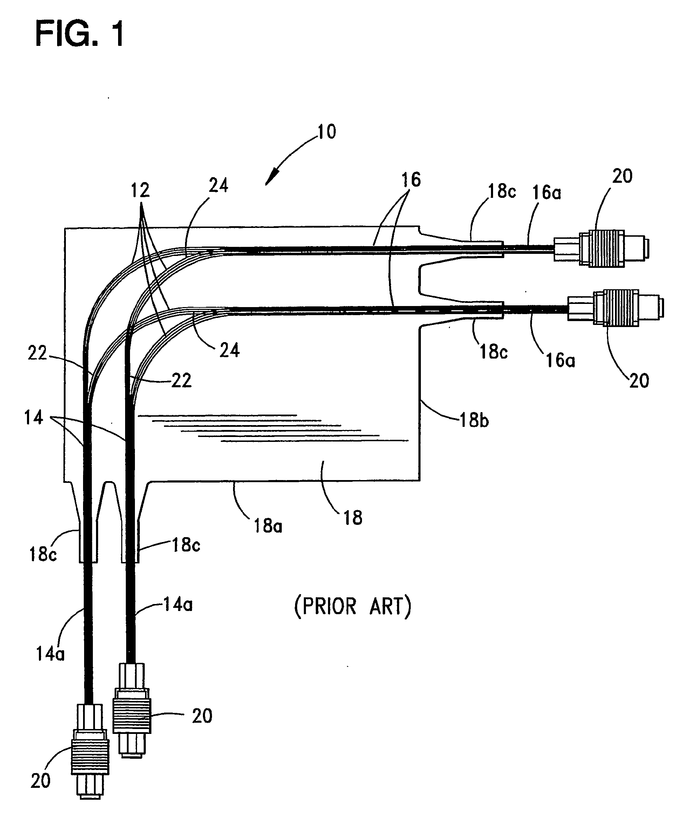

Referring to the drawings in greater detail, and first to FIG. 1, a fiber optic apparatus, generally designated 10, is shown for cross-connecting individual fibers 12 of a plurality of fiber optic ribbons 14 and 16. The individual optical fibers are routed on a substrate 18 in a side-by-side array to form a plurality of first fiber optic ribbons 14 leading onto one side or edge 18a of the substrate. The fibers are re-organized on the substrate to form a plurality of second fiber optic ribbons 16 which lead away from another side or edge 18b of the substrate. The fibers are routed onto and off of tail portions 18c of the substrate which project outwardly from sides or edges 18a and 18b. With the arrangement of FIG.1, first fiber optic ribbons 14 may be considered input ribbons, as at 14a, and second fiber optic ribbons 16 may be considered output ribbons, as at 16a. The input ribbons and output ribbons project away from edges 18a and 18b of the substrate, particularly along and off of tail portions 18c of the substrate, and are terminated to a plurality of fiber optic connectors 20.

As stated above, input ribbons 14/14a are reorganized on substrate 18 to form output ribbons 16/16a. In the example shown in FIG. 1, the input ribbons are split, as at 22, with one-half of each input ribbon joining one-half of the other input ribbon, as at 24, to form each of the output ribbons. In the illustrated embodiment, each input ribbon has eight individual optical ribbons which are split, as at 22, with four of the fibers being joined with four fibers of the other input ribbon, as at 24, to form each of the output ribbons.

Substrate 18 typically has a layer of adhesive on the top surface thereof, and the routed individual optical fibers 12 readily adhere to the surface of the substrate to maintain their position thereon. The individual fibers may be routed by hand or by a mechanized device which typically is computerized. After the individual fibers are properly routed and adhered to the substrate in a particular circuit geometry, such as the geometry shown in FIG. 1 and described above, a conformal coating is applied over the substrate and the routed fibers. The coating also may be applied to the fibers of input ribbons 14a and output ribbons 16a, off the substrate, to hold the ribbons in their ribbonized configurations.

Input and output ribbons 14a and 16a, respectively, are shown terminated to fiber optic connectors 20. In actual practice, ribbons 14a and 16a are cut to fairly restricted or prescribed lengths. As stated in the "Background", above, this is done so that when apparatus 10 is installed in a particular fiber optic application, the ribbons are maintained as straight as possible in order to avoid bending or buckling of the ribbons, and also to avoid taking up valuable space or "real estate" in a dense or compact application, such as is encountered in many backplane usages.

With the above understanding of the structure, manufacture and usage of the prior art fiber apparatus 10 as described above, it can be understood that problems are encountered if there is an error or mistake in the termination of any of the input or output ribbons 14a and 16a, respectively, to connectors 12. It should be understood that if a mistake is made in terminating one of the ribbons, the ribbon must be re-cut in order to provide a clean end for a subsequent re-termination. In order to accommodate such possible re-terminations, manufacturers have built in a tolerance, such as ± 10 millimeters, in the lengths of ribbons 14a and/or 16a. Unfortunately, this built-in tolerance may accommodate only one re-termination. Any additional built-in tolerances would make ribbons 14a and/or 16a unacceptably long because of the bending and space problems described above.

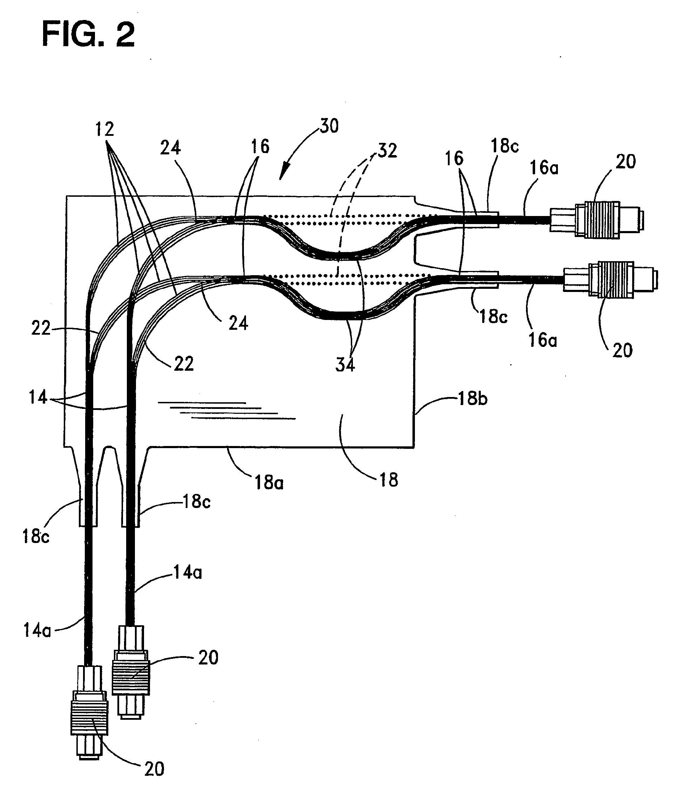

In order to solve the problems described immediately above and in the preceding "Background", a fiber optic apparatus, generally designated 30, has been designed according to the invention and is shown in FIG. 2. Like reference numerals have been applied in FIG. 2 corresponding to like components described above and shown in FIG. 1, in order to avoid duplicity of description or explanation. With that understanding, the position of output ribbons 16 shown in FIG. 1 and described above, is shown by dotted lines 32 in FIG. 2.

Generally, the invention contemplates that one or more of the fiber optic ribbons be provided with an amount of slack to allow an outer portion (e.g., 14a and/or 16a) of the ribbon off of substrate 18 to be varied in length and, thereby, accommodate multiple re-terminations with connectors 20, if necessary. Specifically, FIG. 2 shows that each output ribbon 16 is routed on substrate 18 to form a loop 34 which is offset from the normal uniform path 32 (dotted lines) of the output ribbons. The use of the term "uniform path" herein and in the claims hereof is meant to describe a normal path of routing individual optical fibers on a substrate, such as described above in regard to the prior art apparatus 10 in FIG. 1. Although the uniform paths shown herein are generally right-angled, other circuit geometries are contemplated, such as straight lines, U-shaped paths, or the like, keeping in mind that there are restrictions in the amount of bending that can be achieved with tiny optical fibers which are relatively stiff and brittle. Typically, a uniform path is the most logical or rational path for routing the fibers from one side or edge of the substrate to another side or edge thereof. In the embodiment herein, with the fibers being routed onto edge 18a and routed off of edge 18b, since the edges are at a right-angle to each other, individual fibers 12 logically are routed in a uniform right-angled geometry without abrupt changes, as is shown. In other words, loops 34 (Fig. 2) are provided to offset the fibers out of their normal or rational uniform path to provide an amount of slack that can be used to lengthen ribbons 14a and/or 16a if necessary to provide sufficient re-terminations with connectors 20. In addition, while loops 34 are shown in output ribbons 16, the loops also may be provided in input ribbons 14 or in both the input and output ribbons.

If an operator makes a mistake or discovers a malfunction in the termination of one of the ribbons with its respective connector 20, such as the top output ribbon 16a with its respective connector, the top output ribbon simply is stripped away from substrate 18 at least into the respective loop 34 of the ribbon. To this end, the adhesive on substrate 18 should be a releasable adhesive, and the conformal coating over the fibers and the substrate should be a strippable coating. Once the ribbon is stripped from the substrate, output ribbon 16a can be lengthened, cut-off to a length according to specifications, and re-terminated to a respective connector 20. If that re-termination is successful, output ribbon 16/16a then is re-positioned onto the top of substrate 18 by additional adhesive, and additional conformal coating material can be applied over the re-positioned loop and fibers. This procedure is considerably less expensive than having to discard and waste the entire substrate 18 and the fibers routed thereon. In fact, some connectors 20 may be permanently affixed to the ribbons when terminated. In the embodiment illustrated, if three connectors already have been properly terminated, and an error occurs in the fourth connector, it would be very expensive to discard the entire apparatus including all of the previously, permanently terminated connectors. With the invention, the fourth ribbon simply is re-terminated using the slack in loop 34, and the entire apparatus is saved.

## Claims

1. A fiber optic apparatus (30) for cross-connecting the individual fibers (12) of a plurality of fiber optic ribbons, comprising:
- a substrate (18);
- a plurality of individual optic fibers (12) routed on the substrate (18) to form at least one first fiber optic ribbon (14) leading onto one side (18a) of the substrate (18), the fibers being reorganized on the substrate (18) to form a plurality of second fiber optic ribbons (16) leading away from another side (18b) of the substrate (18), wherein the first fiber optic ribbon (14) and the second fiber optic ribbons (16) are terminated to a plurality of fiber optic connectors (20)
**characterized in that**
- said substrate (18) is provided with a releasable adhesive for adhering the optical fibers (12) to the substrate (18) and a portion being on the substrate (18) of at least one of said second fiber optic ribbons (16) being provided with an amount of slack creating a reservoir of optical fiber to vary the length for a re-termination.

2. The fiber optic apparatus (30) of claim 1, wherein said substrate (18) is generally flat.

3. The fiber optic apparatus (30) of claim 1, including a strippable coating over the optical fibers (12) on the substrate (18).

4. A method of re-terminating a fiber optic apparatus (30) according to one of the claims 1 to 3, comprising the following steps:
- stripping of a second fiber optic ribbon (16) from a substrate (18);
- lengthening the second fiber optic ribbon (16) by providing an amount of slack;
- cutting-off the second fiber optic ribbon (16) to a length according to specifications;
- re-terminating the second fiber optic ribbon (16) to a respective connector (20);
- re-positioning the second fiber optic ribbon (16) onto the top of the substrate (18);
- re-adhering the second fiber optic ribbon (16) to the substrate (18).

## Patentansprüche

1. Faseroptik-Vorrichtung (30) zur wechselseitigen Verbindung der einzelnen Leiter (12) einer Mehrzahl faseroptischer Bandkabel, Folgendes umfassend:
- ein Substrat (18);
- eine Mehrzahl individueller Lichtwellenleiter (12), die auf dem Substrat (18) so angelegt sind, dass sie mindestens ein faseroptisches Bandkabel (14) bilden, das auf eine Seite (18a) des Substrats (18) führt, wobei die Leiter auf dem Substrat (18) so neu geordnet werden, dass sie eine Mehrzahl zweiter faseroptischer Bandkabel (16) bilden, die von einer anderen Seite (18b) des Substrats (18) weg führen, wobei das erste faseroptische Bandkabel (14) und die zweiten faseroptischen Bandkabel (16) an eine Mehrzahl faseroptischer Stecker (20) angeschlossen sind,
**dadurch gekennzeichnet, dass**
- das Substrat (18) mit einem lösbaren Klebstoff zum Kleben der Lichtwellenleiter (12) an das Substrat (18) versehen Ist und wobei ein auf dem Substrat (18) angeordneterTeil mindestens eines der zweiten faseroptischen Bandkabel (16) mit einem Ausmaß an Spiel versehen ist, wodurch ein Lichtwellenleiter-Vorrat zur Variation der Länge für einen Neuanschluss geschaffen wird.

2. Faseroptik-Vorrichtung (30) gemäß Anspruch 1, wobei das Substrat (18) im allgemeinen flach ist.

3. Faseroptik-Vorrichtung (30) gemäß Anspruch 1, die eine abziehbare Beschichtung über den Lichtwellenleitern (12) auf dem Substrat (18) umfasst.

4. Verfahren zum Neuanschluss einer Faseroptik-Vorrichtung (30) gemäß einem der Ansprüche 1 - 3, das folgende Schritte umfasst:
- Abziehen eines zweiten faseroptischen Bandkabels (16) von einem Substrat (18);
- Verlängern des zweiten faseroptischen Bandkabels (16) durch Bereitstellen eines Ausmaßes an Spiel;
- Abschneiden des zweiten faseroptischen Bandkabels (16) auf eine vorgegebene Länge;
- Neuanschließen des zweiten faseroptischen Bandkabels (16) an einen entsprechenden Stecker (20);
- Neupositionieren des zweiten faseroptischen Bandkabels (16) auf der Oberseite des Substrats (18);
- erneutes Aufkleben des zweiten faseroptischen Bandkabels (16) auf das Substrat (18).

## Revendications

1. Un appareil à fibres optiques (30) pour raccorder les fibres individuelles (12) d'une pluralité de rubans à fibres optiques, comprenant :
- un substrat (18) ;
- une pluralité de fibres optiques individuelles (12) acheminées sur le substrat (18) pour former au moins un premier ruban à fibres optiques (14) conduisant sur un côté (18a) du substrat (18), les fibres étant réorganisées sur le substrat (18) pour former une pluralité de deuxièmes rubans à fibres optiques (16) menant loin d'un autre côté (18b) du substrat (18), où le premier ruban à fibres optiques (14) et les deuxièmes rubans à fibres optiques (16) sont terminés par une pluralité de connecteurs à fibres optiques (20)
**caractérisé en ce que**
ledit substrat (18) est fourni avec un fixateur pour faire adhérer les fibres optiques (12) au substrat (18) et une portion étant sur le substrat (18) d'au moins un desdits deuxièmes rubans à fibres optiques (16) étant fournie avec une quantité de jeu créant un réservoir de fibres optiques pour faire varier la longueur pour une nouvelle terminaison.

2. L'appareil à fibres optiques (30) de la revendication 1, où ledit substrat (18) est généralement plat.

3. L'appareil à fibres optiques (30) de la revendication 1, comprenant un revêtement pelable sur les fibres optiques (12) sur le substrat (18).

4. Une méthode pour re-terminer un appareil à fibres optiques (30) selon l'une des revendications 1 à 3, comprenant les étapes suivantes ;
- dénudage d'un deuxième ruban à fibres optiques (16) à partir d'un substrat (18) ;
- allongement du deuxième ruban à fibres optiques (16) en fournissant une quantité de jeu ;
découpage du deuxième ruban à fibres optiques (16) à une longueur conforme aux spécifications ;
- nouvelle terminaison du deuxième ruban à fibres optiques (16) à un connecteur respectif (20) ;
- repositionnement du deuxième ruban à fibres optiques (16) sur le dessus du substrat (18) ;
- refixation du deuxième ruban à fibres optiques (16) au substrat (18).
